(19) Europäisches Patentamt
European Patent Office
Office européen des brevets

(11) EP 1 308 474 A2

(12) EUROPEAN PATENT APPLICATION

(43) Date of publication:
**07.05.2003 Bulletin 2003/19**

(51) Int Cl.[7]: **C08G 69/44**

(21) Application number: **02257486.7**

(22) Date of filing: **29.10.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **30.10.2001 JP 2001332020**

(71) Applicant: **Polyplastics Co Ltd**
**Tokyo 100-6006 (JP)**

(72) Inventor: **Yokota, Toshiaki, Polyplastics Co Ltd.**
**Fuji-shi, Shizuoka 416-8533 (JP)**

(74) Representative: **Mays, Julie**
**Barker Brettell,**
**10-12 Priests Bridge**
**London SW15 5JE (GB)**

# (54) Wholly aromatic polyester-amides and resin-composition therefrom

(57) The present invention is to provide a wholly aromatic polyester amide which is excellent in viscosity and tensile strength in a molten state, can be produced in a usual polymerization apparatus and, easily blow molded and melt stretched and is excellent in hue. That is, a wholly aromatic polyester amide showing optical anisotropy upon melting containing, as essential constituent ingredients, constitutional units represented by the following general formulae (I), (II) and (III) in which the constituent unit (I) is from 50 to 85 mol%, the constituent unit (II) is form 14 to 49 mol% and the constituent unit (III) is from 1 to 15 mol% based on the entire constituent units:

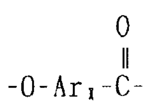
(I)

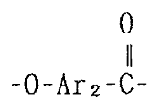
(II)

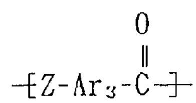
(III)

(wherein $Ar_1$ represents 1,4-phenylene, $Ar_2$ represents 2,6-naphthalane, $Ar_3$ represents a bivalent group containing at least one aromatic ring, Z represents NH or NR, and R represents an alkyl group of 1 to 6 carbon atoms or an aryl group).

EP 1 308 474 A2

## Description

Technical Field of the Invention:

The present invention relates to a wholly aromatic polyester amide which is easily blow molded and melt stretched and which is excellent in hue.

Prior Art:

Liquid crystal polymers have widely suitably been utilized as highly functional engineering plastics because the polymers have excellent flowability, mechanical strength, thermal resistance, chemical resistance and electric properties in a well-balanced state, and most of the plastics have been obtained exclusively by injection molding.

On the other hand, with the remarkable development of industrials in recent years, there is a tendency that applications of such liquid crystal polymers are diversified, more highly sophisticated and specified, and it is expected that they are efficiently economically molded by blow molding, melt stretching and the like to obtain blow molded articles, films, fibers and the like holding excellent physical properties. For example, pipes and containers in an engine room of an automobile are used in a high temperature atmosphere and are required to have superior mechanical properties, and therefore, metal products are exclusively employed for these parts in the field. However, for the sake of weight saving, rust proofing, reduction of processing cost and the like, it is desired to obtain these products by blow molding of the liquid crystal polymers having the above-mentioned excellent properties.

However, the liquid crystal polymers are excellent in flowability and mechanical properties, but it is very difficult to obtain the molded articles having a desired shape, because they are poor in viscosity and tensile strength in a molten state which are generally most important properties for applying the blow molding. As improved methods, there have been contrived a method of using a polyester resin having a high intrinsic viscosity and a high polymerization degree, a method of using a branched polyester resin, a method of adding various fillers, and other methods, but an improvement effect is poor in every method, and these polymers are insufficient as materials for the above processing methods.

Disclosure of the Invention:

The present inventor has intensively researched for the purpose of solving the problem to provide a wholly aromatic polymer which is easily blow molded and melt stretched, and as a result, it has been found that, when a specific amount of an aminobenzoic acid unit is incorporated into a polymer skeleton and a 2-hydroxy-6-naphthoic acid unit is combined with a 4-hydroxybenzoic acid unit in a restricted specific ratio, the above purpose can effectively be achieved, and in consequence, the present invention has been completed.

That is, the present invention is directed to a wholly aromatic polyester amide showing optical anisotropy upon melting containing, as essential constituent ingredients, constituent units represented by the following general formulae (I), (II) and (III) in which the constituent unit (I) is from 50 to 85 mol%, the constituent unit (II) is from 14 to 49 mol% and the constituent unit (III) is from 1 to 15 mol% based on the entire constituent units:

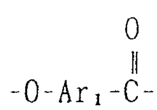

(I)

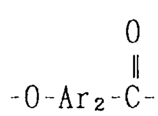

(II)

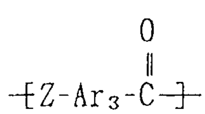

(III)

(wherein $Ar_1$ represents 1,4-phenylene, $Ar_2$ represents 2,6-naphthalene, $Ar_3$ represents a bivalent group containing

at least one aromatic ring, Z represents NH or NR, and R represents an alkyl group of 1 to 6 carbon atoms or an aryl group).

Detailed Description of the Invention:

For realizing the constituent units of (I) to (III), various compounds having usual ester-forming ability are employed. The following will explain starting compounds which are necessary for forming the wholly aromatic polyester amide constituting the present invention, in detail in due order.
The constituent unit (I) is introduced from 4-hydroxybenzoic acid.
The constituent unit (II) is introduced from 2-hydroxy-6-naphthoic acid.
The constituent unit (III) is an aminocarboxyaryl moiety, in which the amino group may be either substituted or unsubstituted. Examples of monomers for introducing the constituent unit (III) include p-aminobenzoic acid, p-N-methylaminobenzoic acid, m-aminobenzoic acid, 3-methyl-4-aminobenzoic acid, 2-chloro-4-aminobenzoic acid, 4-amino-1-naphtoic acid, and the like.
In the present invention, it is necessary to contain the constituent units (I) to (III) and it is also necessary that the constituent unit (I) is in the range of 50 to 85 mol%, preferably 60 to 80 mol%, more preferably 65 to 75 mo%, the constituent unit (II) is in the range of 14 to 49 mol%, preferably 18 to 38 mol%, more preferably 22 to 32 mo%, and the constituent unit (III) is in the range of 1 to 15 mol%, preferably 2 to 12 mol%, more preferably 3 to 10 mo% based on the entire constituent units.
When the constituent unit (I) is less than 50 mol%, a polymer hue is lowered and the case is not preferable in quality. Moreover, when it exceeds 85 mol%, the reaction product solidifies in the middle of the reaction and thus a polyester amide having an aimed molecular weight cannot be obtained. When the constituent unit (II) is less than 14 mol%, the reaction product solidifies in the middle of the reaction owing to the high melting point and thus a polyester amide having an aimed molecular weight cannot be obtained. Moreover, when it exceeds 49 mol%, a polymer hue is lowered and the case is not preferable in quality. Furthermore, when the constituent unit (III) is less than 1 mol%, viscosity and tensile strength in a molten state are low and thus a polymer easily blow molded and melt stretched cannot be obtained. When it exceeds 15 mol%, the reaction product solidifies by gelation in the middle of the reaction and thus a polyester amide having an aimed molecular weight cannot be obtained.
Moreover, into the polyester amide of the present invention can be introduced a small amount of other known constituent units in such a range that the object of the present invention is not inhibited. The known other constituent units include dicarboxylic acid units including terephthalic acid as the representative and diol units including hydroquinone and dihydroxybiphenyl as the representatives.
It is to be noted that Japanese Patent Application Laid-Open No. 177020/1982 proposes a copolymerized polyester amide containing the constituent units (I), (II), and (III) in a ratio of 0 to 45 mol%, 10 to 90 mol%, and 5 to 45 mol%, respectively, but the constituent unit (I) is from 0 to 45 mol% and hence the content of the constituent unit (II) or (III) becomes large, so that a polyester amide having a satisfactory hue and an aimed molecular weight cannot be obtained.
Furthermore, Japanese Patent Application Laid-Open No. 77691/1979 proposes a copolymerized polyester containing the constituent units (I) and (II) in a ratio of 10 to 90 mol% and 10 to 90 mol%, respectively, but since it contains no constituent unit (III), the viscosity and tensile strength in a molten state become low and thus a polymer which is easily blow molded and melt stretched cannot be obtained.
The wholly aromatic polyester amide of the present invention is obtainable by polymerization using a direct polymerization process or an ester-exchanging process. At the polymerization, melt polymerization, solution polymerization, slurry polymerization, solid-state polymerization, or the like is employed.
In the present invention, at the polymerization, an acylating agent for a polymerization monomer or a monomer whose end is activated as an acid chloride derivative can be employed. The acylating agent includes acid anhydrides such as acetic anhydride.
At the polymerization, various catalysts can be used, and representative examples include dialkyltin oxides, diaryltin oxides, titanium dioxide, alkoxytitanium silicates, titanium alcoholates, alkali or alkaline earth metal salts of carboxylic acids, salts of Lewis acids such as $BF_3$, and the like. The amount of the catalyst is generally from about 0.001 to 1 wt%, particularly preferably about 0.003 to 0.2 wt% based on total weight of the monomers.
Moreover, in the case of solution polymerization or slurry polymerization, liquid paraffin, highly heat-resistant synthetic oil, inert mineral oil, or the like is employed as a solvent.
As the reaction conditions, the reaction temperature is from 200 to 380°C and the final pressure is from 0.1 to 760 Torr (i.e., 13 to 101,080 Pa). Particularly in the reaction in a molten state, the reaction temperature is from 260 to 380°C, preferably from 300 to 360°C and the final pressure is from 1 to 100 Torr (i.e., 133 to 13,300 Pa), preferably from 1 to 50 Torr (i.e., 133 to 6,670 Pa).
The melt polymerization is carried out at a predetermined reduced pressure achieved by starting pressure

reduction after the reaction system reaches a predetermined temperature. After the torque of a stirring machine reaches a predetermined value, an inert gas is introduced to change the reaction system from the reduced state to a predetermined pressurized state via normal pressure and thereby a polymer is discharged from the reaction system.

The polymer produced by the above polymerization process can be further subjected to the increase of the molecular weight by solid-state polymerization of heating under normal pressure or reduced pressure or in an inert gas. As preferred conditions for the solid-state polymerization, the reaction temperature is from 230 to 350°C, preferably 260 to 330°C, and a final pressure is from 10 to 760 Torr (i.e., from 1,330 to 101,080 Pa).

In the present invention, it is an essential factor for achieving both of thermal stability and easy processability to be a liquid crystal polymer showing optical anisotropy upon melting. Some of the wholly aromatic polyester amides comprising the constituent units (I) to (III) do not form an anisotropic molten phase depending on the constituent ingredients and sequence distribution in the polymers, but the polymers according to the present invention are restricted to the wholly aromatic polyester amide showing optical anisotropy upon melting.

The nature of melt anisotropy can be confirmed by conventional polarization analysis utilizing a crossed polarizer. More specifically, the confirmation of melt anisotropy can be carried out by using a polarizing microscope manufactured by Olympus, melting a sample placed on a hot stage manufactured by Lincam, and observing it at a magnification of 150 under a nitrogen atmosphere. The polymer is optically anisotropic and, when it is inserted between crossed polarizers, light is transmitted. When a sample is optically anisotropic, polarized light is transmitted even in a molten stationary liquid state, for example.

As a factor for processability according to the present invention, liquid crystallinity and melting point (liquid crystallinity-expressing temperature) are mentioned. The expression of liquid crystallinity deeply depends on the flowability upon melting, and it is indispensable that the polyester amide of the present application exhibits liquid crystallinity in a molten state.

Since a remarkable viscosity decrease of a nematic liquid crystalline polymer occurs at a temperature of melting point or higher, the exhibition of liquid crystallinity at a temperature of melting point or higher becomes an index for processability. The melting point (liquid crystallinity-expressing temperature) is preferably as high as possible in view of thermal resistance, but when thermal degradation at melt processing of the polymer and heating capacity of a molding machine are considered, a temperature of 380°C or lower is a desirable standard.

Furthermore, the melt viscosity at a shearing rate of 1000 $sec^{-1}$ is preferably $1 \times 10^6$ Pa·s or less at a temperature higher by 10 to 40°C than the melting point. More preferably, it is $1 \times 10^3$ Pa·s or less. Such melt viscosity is mostly realized by possessing liquid crystallinity.

In blow molding and melt stretching, a crystal polymer having a high intrinsic viscosity and a high degree of polymerization is needed but, even when melt polymerization time is prolonged or a product after melt polymerization is converted into a polymer having higher molecular weight by solid-state polymerization, these treatment are insufficient for increasing melt viscosity such a high value that enables the improvement of the moldability. Therefore, when a liquid crystal polymer having a low melt viscosity at a temperature higher than blow molding temperature and melt stretching temperature is produced and the polymer exhibits a high melt viscosity at the molding/processing temperature, the polymer is a liquid crystal polymer having both of producibility and molding/processing ability. That is, preferred is a polymer having a large variation of melt viscosity with temperature. Particularly, when the melt viscosity at a shearing rate of 1000 $sec^{-1}$ at a temperature higher by 10°C than the melting point is expressed by A and the melting viscosity at a shearing rate of 1000 $sec^{-1}$ at a temperature higher by 30°C than the melting point is expressed by B, preferred is a wholly aromatic polyester amide which satisfies the following relation. When the value according to the following relation is less than 0.018, the melt viscosity at blow molding and melt stretching decreases and hence molding/processing ability becomes inferior.

$$(\mathrm{Log}\ A - \mathrm{Log}\ B)/20 \geq 0.018$$

The polyester amide of the present invention may be blended with various fibrous, powdery granular, or plate-shape inorganic and organic fillers depending on the intended use.

Illustrative examples of fibrous fillers include inorganic fibrous materials such as glass fibers, asbestos fibers, silica fibers, silica·alumina fibers, alumina fibers, zirconia fibers, boron nitride fibers, silicon nitride fibers, boron fibers, potassium titanate fibers, fibers of silicates., e.g., wollastonite, magnesium sulfate fibers, aluminum borate fibers, and fibers of metals, e.g., stainless steel, aluminum, titanium, copper and brass. A particularly representative fibrous filler is a glass fiber. In addition, organic fibrous materials having a high melting point such as polyamides, fluorocarbon resins, polyester resins and acryl resins may also be used.

Illustrative examples of particulate fillers include carbon black, graphite, silica, quartz powder, glass beads, milled glass fibers, glass balloons, glass powder, silicates such as calcium silicate, aluminum silicate, kaolin, clay, diatomaceous earth or wollastonite, metal oxides such as iron oxide, titanium oxide, zinc oxide, antimony trioxide or

alumina, metal carbonates such as calcium carbonate or magnesium carbonate, metal sulfates such as calcium sulfate or barium sulfate, as well as ferrites, silicon carbide, silicon nitride, boron nitride and a variety of metal powders.

Illustrative examples of plate-shaped fillers include mica, glass flakes, talc and a variety of metal foils.

Illustrative examples of organic fillers include synthetic fibers having heat resistance and high strength such as aromatic polyester fibers, liquid crystal polymer fibers, aromatic polyamides and polyimide fibers.

These inorganic and organic fillers can be used solely or in combination. The combination of a fibrous filler and a granular or plate-shape filler is a particularly preferred combination for possessing mechanical strength and dimensional accuracy, electric properties, and the like at the same time. The blending amount of the inorganic filler is from 1 to 120 parts by weight, preferably from 20 to 120 parts by weigh more preferably from 20 to 80 parts by weight based on parts by weight of the wholly aromatic polyester amide.

At the use of these fillers, a sizing agent or a surface-treating agent can be used, if necessary.

Furthermore, to the polyester amide of the present invention, other thermoplastic resin may be secondarily added as an auxiliary in an amount range without harming the object of the present invention.

Examples of the thermoplastic resin for use in this case include polyolefins such as polyethylene or polypropylene, aromatic polyesters comprising aromatic dicarboxylic acids and diols, such as polyethylene terephthalate or polybutylene terephthalate, polyacetals (homo- or co-polymers), polystyrene, polyvinyl chloride, polyamides, polycarbonate, ABS, polyphenylene oxide, polyphenylene sulfide, fluororesins, and the like. These thermoplastic resins can be used as a mixture of two or more of them.

Effect of the Invention:

The wholly aromatic polyester amide showing optical anisotropy upon melting comprising specific constitutional units, obtainable according to the present invention, has a high viscosity in a molten state, so that it is easily blow molded and melt stretched and is capable of efficiently processing economically to form a blow molded article, film, and fiber maintaining excellent properties of a liquid crystal polyester amide, and also it is excellent in hue as a molded article.

Examples:

The following will explain the present invention in more detail with reference to examples, but the present invention is not limited thereto. It is to be noted that the methods for measuring physical properties in the examples are as follows.

[Melting point]

It was measured on a DSC manufactured by Perkin-Elmer, Inc. under a temperature-elevating condition of 20°C/min.

[Polymer hue]

Using a color-difference meter manufactured by Nihon Densyoku kogyo, color was measured according to 0° -d method defined in JIS Z8722, from which hue L (blackness) and b value (yellowness) are determined according to Hunter's color difference formula defined in JIS Z8730.

[Melt viscosity]

Under conditions of the measuring temperature shown in Table 1 and a shearing rate of 1000 $sec^{-1}$, the viscosity was measured on a capirograph manufactured by Toyo Seiki Seisaku-Sho, Ltd. using an orifice having an inner diameter of 1 mm and a length of 20 mm.

Example 1

Into a polymerization vessel fitted with a stirrer, a reflux column, a monomer inlet, a nitrogen inlet, and a pressure-reducing/discharging line were charged the following starting monomers, metal catalyst, and acylating agent, and the replacement with nitrogen was started.

(I) 211 g (68 mol%) of 4-Hydroxybenzoic acid
(II) 114 g (27 mol%) of 2-Hydroxy-6-naphthoic acid

(III) 15 g (5 mol%) of 4-Aminobenzoic acid
22.5 mg of Potassium acetate catalyst
234 g of Acetic anhydride

After the starting materials were charged, the temperature of the reaction system was raised to 140°C, followed by 1 hour of the reaction at 140°C. Thereafter, the temperature was raised to 325°C over a period of 3.3 hours and then the pressure was reduced to 10 Torr (i.e., 1330 Pa) over a period of 15 minutes and melt polymerization was carried out with distilling acetic acid, excess acetic anhydride, and other low-boiling matter. After stirring torque reached a determined value, the system was changed from a reduced pressure state to a pressurized state via normal pressure by introducing nitrogen to discharge a polymer from the bottom of the polymerization vessel.
The melting point, melt viscosity (A) at a temperature higher by 10°C than the melting point, melt viscosity (B) at a temperature higher by 30°C than the melting point, and polymer hue of the resulting polymer were measured. There was observed a large viscosity increase with temperature in a molten state.

Example 2

Polymerization was carried out in the same manner as in Example 1 with the exception that the kinds of starting monomers and the charging amounts were as follows.

(I) 196 g (63 mol%) of 4-Hydroxybenzoic acid
(II) 114 g (27 mol%) of 2-Hydroxy-6-naphthoic acid
(III) 31 g (10 mol%) of 4-Aminobenzoic acid
22.5 mg Potassium acetate catalyst
234 g of Acetic anhydride

Comparative Example 1

Polymerization was carried out in the same manner as in Example 1 with the exception that the kinds of starting monomers and the charging amounts were as follows.

(I) 55 g (20 mol%) of 4-Hydroxybenzoic acid
(II) 226 g (60 mol%) of 2-Hydroxy-6-naphthoic acid
(III) 77 g (20 mol%) of 4-Acetoaminobenzoic acid
22.5 mg of Potassium acetate catalyst
167 g of Acetic anhydride

This polymer exhibits a large viscosity increase with temperature in a molten state but a lowered polymer hue.

Comparative Example 2

Polymerization was carried out in the same manner as in Example 1 with the exception that the kinds of starting monomers and the charging amounts were as follows.

(I) 191 g (60 mol%) of 4-Hydroxybenzoic acid
(II) 87 g (20 mol%) of 2-Hydroxy-6-naphthoic acid
(III) 89 g (20 mol%) of 4-Acetoaminobenzoic acid
22.5 mg of Potassium acetate catalyst
192 g of Acetic anhydride

In this example, the reaction product solidifies in the middle of the reaction and hence an aimed polymer could not be obtained.

Comparative Example 3

Polymerization was carried out in the same manner as in Example 1 with the exception that the kinds of starting monomers and the charging amounts were as follows.

(I) 304 g (90 mol%) of 4-Hydroxybenzoic acid

(II) 23 g (5 mol%) of 2-Hydroxy-6-naphthoic acid
(III) 17 g (5 mol%) of 4-Aminobenzoic acid
22.5 mg of Potassium acetate catalyst
255 g of Acetic anhydride

In this example, the reaction product solidifies in the middle of the reaction and hence an aimed polymer could not be obtained.

Comparative Example 4

Polymerization was carried out in the same manner as in Example 1 with the exception that the kinds of starting monomers and the charging amounts were as follows.

(I) 226 g (73 mol%) of 4-Hydroxybenzoic acid
(II) 114 g (27 mol%) of 2-Hydroxy-6-naphthoic acid
22.5 mg of Potassium acetate catalyst
234 g of Acetic anhydride

This polymer has a small viscosity increase with temperature in a molten state and hence an aimed polymer could not be obtained.

Table 1

| | | Monomer composition (mol%) | | | Melting point (°C) | Melt viscosity (Pa·s) | | (Log A-Log B)/20 | L | b |
|---|---|---|---|---|---|---|---|---|---|---|
| | | (I) | (II) | (III) | | A | B | | | |
| Example | 1 | 68 | 27 | 5 | 272 | 309 | 88 | 0.027 | 82.1 | 18.0 |
| | 2 | 63 | 27 | 10 | 263 | 1349 | 351 | 0.029 | 82.6 | 16.9 |
| Comp. Example | 1 | 20 | 60 | 20 | 262 | 117 | 44 | 0.021 | 79.9 | 18.3 |
| | 2 | 60 | 20 | 20 | - | - | - | - | - | - |
| | 3 | 90 | 5 | 5 | - | - | - | - | - | - |
| | 4 | 73 | 27 | - | 282 | 88 | 46 | 0.014 | 82.9 | 15.1 |

A: Melt viscosity at a shearing rate of 1000 $sec^{-1}$ at a temperature of the melting point + 10°C.
B: Melt viscosity at a shearing rate of 1000 $sec^{-1}$ at a temperature of the melting point + 30°C.

## Claims

1. A wholly aromatic polyester amide showing optical anisotropy upon melting containing, as essential constituent ingredients, constitutional units represented by the following general formulae (I), (II) and (III) in which the constituent unit (I) is from 50 to 85 mol%, the constituent unit (II) is from 14 to 49 mol% and the constituent unit (III) is from 1 to 15 mol% based on the entire constituent units:

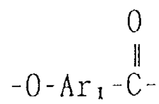
(I)

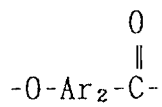
(II)

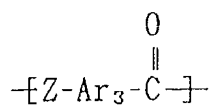
(III)

(wherein $Ar_1$ represents 1,4-phenylene, $Ar_2$ represents 2,6-naphthalene, $Ar_3$ represents a bivalent group containing at least one aromatic ring, Z represents NH or NR, and R represents an alkyl group of 1 to 6 carbon atoms or an aryl group).

2. The wholly aromatic polyester amide as defined in claim 1, wherein the melt viscosity at a shearing rate of 1000 $sec^{-1}$ is $1 \times 10^6$ Pa·s or less at a temperature higher by 10 to 40°C than the melting point of the wholly aromatic polyester amide.

3. The wholly aromatic polyester amide as defined in claim 1 or 2, wherein the melt viscosity (A) at a shearing rate of 1000 $sec^{-1}$ at a temperature higher by 10°C than the melting point and a melting viscosity (B) at a shearing rate of 1000 $sec^{-1}$ at a temperature higher by 30°C than the melting point satisfy the following expression:

$$(\text{Log } A - \text{Log } B)/20 \geq 0.018.$$

4. A polyester amide resin composition obtained by blending from 1 to 120 parts by weight of an inorganic or organic filler with 100 parts by weight of the wholly aromatic polyester amide as defined in claim 1.

5. A molded article produced by blow molding using the wholly aromatic polyester amide as defined in claim 1 or the polyester amide resin composition as defined in claim 4.

6. A molded article produced by melt stretching by using the wholly aromatic polyester amide as defined in claim 1 or the polyester amide resin composition as defined in claim 4.

7. The molded article as defined in claim 5 or 6, which is a blow molded article, film or fiber.